# EUROPEAN PATENT SPECIFICATION

(11) **EP 2 110 993 B1**
(45) Date of publication and mention of the grant of the patent: **07.03.2012**
(21) Application number: 09150352.4
(22) Date of filing: 09.01.2009
(51) Int. Cl.: H04L 12/28, H04L 29/06, G06F 15/16

(54) **Content distribution method between a network apparatus and a server**
Inhaltsverteilungsverfahren zwischen einer Netzwerkvorrichtung und einem Server
Procédé de distribution de contenu entre un appareil de réseau et un serveur

(30) Priority: 18.04.2008 JP 2008109420
(43) Date of publication of application: 21.10.2009
(73) Proprietor: Hitachi, Ltd., Tokyo 100-8280 (JP)
(72) Inventor: Moribe, Hirotaka, Tokyo 100-8220 (JP); Kodama, Shoji, Tokyo 100-8220 (JP); Nagai, Yasushi, Tokyo 100-8220 (JP)
(74) Representative: MERH-IP Matias Erny Reichl Hoffmann

(56) References cited:
- EP-A- 1 058 421
- EP-A- 1 130 875
- US-A1- 2004 111 490

## Description

### BACKGROUND

The present invention relates to a network apparatus, a content distribution method and a computer program product for backing up data (content) retained in the respective appliances on a home network to a storage apparatus on the network.

The number of information appliances such as portable appliances as represented by mobile phones and AV household appliances owned by individuals is increasing, and the amount of data retained in such information appliances is also increasing. Pursuant to the increase in the number of information appliances and the amount of data, the remaining capacity for recording data will become stringent and the risk of data loss caused by the malfunction or loss of appliances or erroneous erasures of data is increasing. In order to prepare for the foregoing circumstances, measures for backing up data in other appliances or replicating data in mediums such as CDs and DVDs are generally being taken.

For instance, JP-2002112314 A (Patent Document 1) discloses a scheme for backing up the various data retained in a mobile phone to a storage apparatus on a network, and a scheme for referring to the backed up data.
A similar approach is disclosed by US 2004/111490 A1, proposing a system and method being capable of recovering system and user data of a home server by allowing a user to press a recovery button when the home server cannot be recovered from a fault state due to a functional error of the home server configured in the home network system. Initial system data of the home server, controlling and managing a home network connected to a plurality of home appliances is automatically stored in an internal database as backup data. Data updated in the home server is periodically transmitted to a portal server connected to the home server through the Internet. Therefore, data, damaged due to a functional error of the home server, can be automatically recovered by using the backup data stored in the portal server; Maintenance and management of the home server can be conveniently and cost-effectively achieved and stability of the home network system can be ensured.
Addressing the issues of differing communication protocols, EP-A-1130875 discloses a communication network system, a gateway, and a data communication method, in which the gateway performs protocol conversion to enable a person who issues an access request retrieving a desired access destination easily. This is achieved by adding functions of routing information providing and authentication processing are added to a gateway that performs protocol conversion between two different communication networks. When an access request is issued from a public communication network such as Internet to a terminal in a local (private) communication network connected to the gateway, a request terminal is authenticated to enable prevention of unauthorized data writing and reading; and an access request user who succeeded in the authentication is provided with an active terminal list comprising accessible terminal information, or with a user condition table.

Meanwhile, in the respective households, AV household appliances such as digital cameras and portal music players are connected to an appliance comprising a large-capacity storage apparatus such as a PC or NAS (Network Attached Storage) via a USB (Universal Serial Bus) cable, or via a home network configured using Ethernet (registered trademark) or a wireless LAN, in order to multiplex data.

Data such as video, audio and photographs backed up in the PC or NAS apparatus, in addition to being shared as files via protocols such as NFS (Network File System), SMB (Server Message Block), or CIFS (Common Internet File System), can also be released and referred to among appliances compatible with standards such as the DLNA (Digital Living Network Alliance) guidelines described in the Digital Living Network Alliance Home Networked Device Interoperability Guidelines Version: 1.0, [online], June 2004, Digital Network Alliance, Internet URL:http://www.dlna.org (Non-Patent Document 1), which is a protocol that realizes plug and play via the home network.

### SUMMARY

Incidentally, while the mobile phone described in Patent Document 1 backs up data to a storage apparatus that is connectable via a mobile phone network using an independent protocol, the PC and AV household appliances of Non-Patent Document 1 back up the retained data to a storage apparatus on a home network or the Internet connectable via the home network using independent protocols, respectively.

Like this, since the physical operation interface and user interface such as the operation screen, in particular the quality, performance and configuration of the connected network will differ depending on the appliance, and also because the vendors providing the service are different, software for backing up data based on the independent protocol is loaded according to the respective appliances.

Nevertheless, even in cases where an appliance on the home network tries to refer to data that was backed up to a storage apparatus by another appliance, the data cannot be mutually referred to unless the appliances support the same protocol. For example, even if data retained in a mobile phone is backed up to a storage apparatus on the Internet with an independent protocol via a mobile phone network, an appliance on the home network that does not support that protocol is not able to directly refer to such backed up data. The standardization of a specification for performing backup or referring to data using a new specific protocol or the introduction of software corresponding to such specification in numerous appliances in order to overcome the foregoing problem will face high barriers.

In addition, for example, even if common technology is introduced for uniformly backing up and managing data retained in a plurality of appliances on the home network to enable appliances on the home network to refer to such data, it will be difficult to select, refer to and acquire the required data among the numerous backup data.

Moreover, appliances such as immobile phones have a problem in that, since they are used by being detached from the home network, they are not able to refer to and acquire data being retained by appliances (mobile phones, etc.) that are removed from the home network.

Accordingly, if appliances such as mobile phones and AV household appliances connected to a home network are able to comprise a scheme of using existing common networks or standard procedures of a plug and play protocol to automatically back up data retained in the respective apparatuses on the home network to a storage apparatus on the network, and a scheme of efficiently referring to the backup data, it should be possible to overcome the foregoing problems.

The present invention was devised in view of the foregoing points. Thus, an object of the present invention is to propose a network apparatus, a content distribution method and a computer program product capable of efficiently accessing desired contents.
This object is achieved by the subject-matter according to the independent claim 1. The dependent claims refer to preferred embodiments of the invention.

The present invention provides a network apparatus comprising a confirmation unit for confirming an appliance connected to a network in a certain area at predetermined time intervals, a transfer unit for transferring a content retained in the appliance from the appliance connected to the network to a storage apparatus outside of the area, a setting unit for setting a virtual device of the appliance when the confirmation unit detects that the appliance has been disconnected from the network, and a distribution unit for distributing, when an acquisition request of the content is issued to the appliance disconnected from the network, the content read from the storage to a sending source of the acquisition request with the virtual device as the transmission source of the content.

The present invention additionally provides a content distribution method of a network apparatus comprising a first step of a confirmation unit confirming an appliance connected to a network in a certain area at predetermined time intervals, a second step of a transfer unit transferring a content retained in the appliance from the appliance connected to the network to a storage apparatus outside of the area, a third step of a setting unit setting a virtual device of the appliance when the confirmation unit detects that the appliance has been disconnected from the network, and a fourth step of a distribution unit distributing, when an acquisition request of the content is issued to the appliance disconnected from the network, the content read from the storage to a sending source of the acquisition request with the virtual device as the transmission source of the content.

The present invention further provides a computer program product for causing a network apparatus to execute a first step of confirming an appliance connected to a network in a certain area at predetermined time intervals, a second step of transferring a content retained in the appliance from the appliance connected to the network to a storage apparatus outside of the area, a third step of setting a virtual device of the appliance when the confirmation unit detects that the appliance has been disconnected from the network, and a fourth step distributing, when an acquisition request of the content is issued to the appliance disconnected from the network, the content read from the storage to a sending source of the acquisition request with the virtual device as the transmission source of the content.

Accordingly, it is possible to automatically back up the contents retained in the appliances on the network to a storage apparatus connectable via a network outside the network, and efficiently refer to and acquire backup data corresponding to the data retained in the appliances that were removed from the network according to changes in the configuration of appliances on the network.

According to the present invention, it is possible to realize a network apparatus, a content distribution method and a program capable of efficiently accessing desired contents.

### DESCRIPTION OF DRAWINGS

Fig. 1 is a diagram showing a configuration example of a network system according to an embodiment of the present invention;

Fig. 2 is a diagram showing a configuration example of hardware of a network apparatus according to an embodiment of the present invention;

Fig. 3 is a functional block diagram of the network apparatus according to an embodiment of the present invention;

Fig. 4 is a flowchart showing the flow of core processing of the network apparatus according to an embodiment of the present invention;

Fig. 5 is a flowchart showing the flow of search request processing of the network apparatus according to an embodiment of the present invention;

Fig. 6 is a flowchart showing the flow of virtual device processing of the network apparatus according to an embodiment of the present invention;

Fig. 7 is a conceptual diagram explaining a device information table;

Fig. 8 is a conceptual diagram explaining a content information table;

Fig. 9 is a conceptual diagram explaining a virtual device creation request message; and

Fig. 10 is a conceptual diagram explaining a virtual device termination request message.

### DETAILED DESCRIPTION

A network system 1 according to an embodiment of the present invention is now explained.

(1) System Configuration

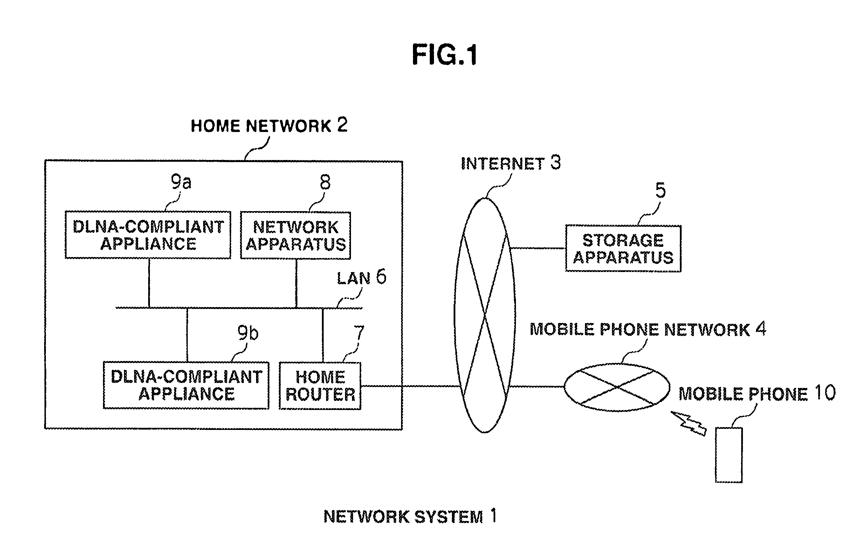

Fig. 1 is a diagram showing a configuration example of the network system 1 according to the present embodiment.

The network configuration in the network system 1 of this embodiment includes a home network 2, Internet 3, a mobile phone network 4 and a storage apparatus 5. The home network 2, the mobile phone network 4 and the storage apparatus 5 are connected to the Internet 3 and are mutually communicable.

The home network 2 is configured from a home router 7, a network apparatus 8, and two household appliances compliant with the DLNA guidelines (hereinafter referred to as the "DLNA-compliant appliances 9"). Each appliance is allocated with a private address defined by TCP/IP or the like, and is able to communicate with each other by connecting to a LAN (Local Area Network) 6.

The home router 7 is loaded with an address translation function such as NAT (Network Address Translation), and connects the network apparatus 8 and the DLNA-compliant appliances 9, which are connected to the LAN 6, to the Internet 3.

The network apparatus 8 is connected to the Internet 3 via the home router 7, and is mutually connectable to the storage apparatus 5. The network apparatus 8 is a personal computer, TV, a hard disk recorder, a set top box or the like with a communication function. The network apparatus 8 may also be loaded with software compliant with the DLNA guidelines.

The DLNA-compliant appliances 9 (9a, 9b) are able to communicate based on a protocol defined by the DLNA guidelines. The DLNA guidelines primarily define appliances equipped with the functions as a DMS (Digital Media Server) that retains and offers contents, and a DMP (Digital Media Player) that acquires contents from the DMS and plays such contents. Needless to say, a single DLNA-compliant appliance 9 may be equipped with the functions of DMS and DMP. The DLNA-compliant appliances 9 are a hard disk recorder, a TV, a printer, a digital camera, a digital video recorder, a portable terminal such as a mobile player capable of playing video and music or a mobile phone, a personal computer and the like loaded with a communication function.

The LAN 6 is configured using a communication circuit such as the Ethernet (registered trademark), an electric lamp line, radio transmission or infrared rays.

The mobile phone network 4 connects a mobile phone 10 by way of communication, and for instance enables communication via a wireless communication system such as W-CDMA or CDMA 2000.

The mobile phone 10 is connected to the mobile phone network 4 by way of communication and is able to connect to the Internet 3 via a gateway in the mobile phone network 4. As a result of possessing the connection function to the mobile phone network 4 and exclusively possessing the connection function via wireless LAN or the like, the mobile phone 10 is able to connect to the LAN 6 and also connect to the home network 2. Here, the mobile phone 10 may also be loaded with software compliant with the DLNA guidelines. The mobile phone 10 may additionally be loaded with a function for backing up the contents retained in the mobile phone 10 to the storage apparatus 5 described later via the mobile phone network 4 using an independent protocol.

The storage apparatus 5 is connected to the Internet 3, and operates as a file server by using a protocol such as NFS (Network File System), HTTP (Hypertext Transfer Protocol), or FTP (File Transfer Protocol).

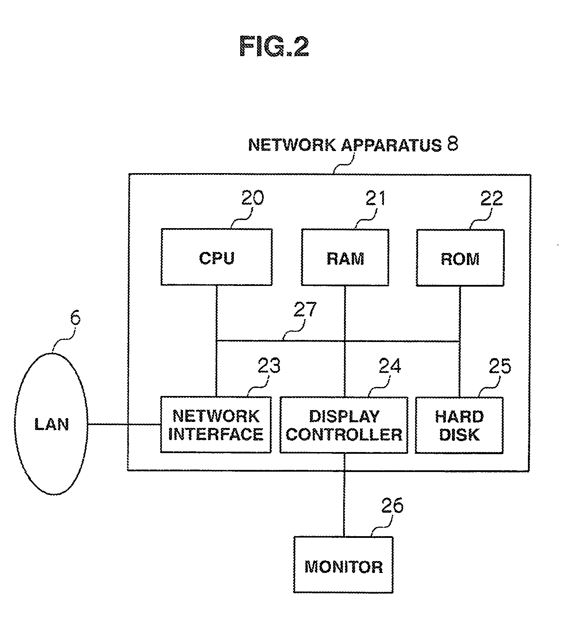

Fig. 2 is a diagram showing a configuration example of hardware of the network apparatus 8 according to the present embodiment.

The network apparatus 8 comprises a CPU 20 that governs the control of the overall network apparatus 8, a RAM (Random Access Memory) 21 and a ROM (Read Only Memory) 22 storing data and programs, a network interface 23 for sending and receiving data to and from the LAN 6, a display controller 24 for performing control to display information on the connected monitor 26, and a hard disk 25 capable of recording and deleting data, and these components are connected via an internal bus 27. Incidentally, the display controller 24 may be omitted depending on the mode of the network apparatus 8. In addition, the hard disk 25 may be a separate external storage apparatus or a storage medium.

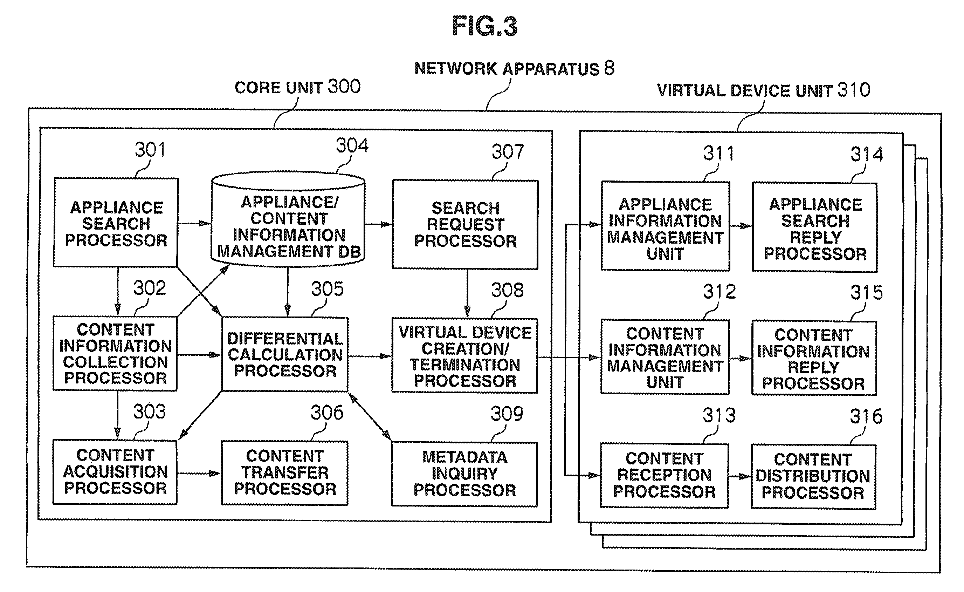

Fig. 3 is a diagram showing a functional block of the network apparatus 8 according to the present embodiment.

The network apparatus 8 comprises a core unit 300 configured from an appliance search processor 301, a content information collection processor 302, a content acquisition processor 303, an appliance/content information management DB 304, a differential calculation processor 305, a content transfer processor 306, a search request processor 307, a virtual device creation/termination processor 308 and a metadata inquiry processor 309, as well as a virtual device unit 310 configured from an appliance information management unit 311, a content information management unit 312, a content reception processor 313, an appliance search reply processor 314, a content information reply processor 315 and a content distribution processor 316 that are dynamically created with the virtual device creation/termination processor 308.

The appliance search processor 301 uses a local multi-cast address and sends an appliance search (M-SEARCH) message compliant with SSDP (Simple Service Discovery Protocol) defined by the DLNA guidelines to the LAN 6 at predetermined time intervals. The appliance search processor 301 receives, from the DLNA-compliant appliance 9 as an appliance compliant with the DLNA guidelines and connected to the LAN 6, a reply message containing location identifier information (URL (Uniform Resource Locator), etc.) including the device name and specification of the DLNA-compliant appliance 9 for accepting inquiries concerning the device information, and the unique service type to become a unique identifier of the DLNA-compliant appliance 9.

Subsequently, when the appliance search processor 301 sends a request to the location identifier for acquiring the device information, in receives a reply message including the device information and the location identifier information (URL, etc.) for accepting inquiries concerning the content information. Based on the above, the appliance search processor 301 becomes aware of the DLNA-compliant appliance 9 connected to the LAN 6. The appliance search processor 301 thereafter stores the obtained device information of the respective DLNA-compliant appliances 9 in the appliance/content information management DB 304 described later.

The content information collection processor 302 sends, via the LAN 6, a request to the destination indicated with the location identifier information for making inquiries concerning the content information of the respective DLNA-compliant appliances 9 on the LAN 6 obtained by the appliance search processor 301, and thereby acquires metadata of the content including the URL, content name, bit rate and size for acquiring the respective contents retained in each DLNA-compliant appliance 9. In addition, the content information collection processor 302 stores the obtained content information including the metadata and the like of the respective contents retained by each DLNA-compliant appliance 9 in the appliance/content information management DB 304 described later.

The content acquisition processor 303 sends, via the LAN 6, a request to the URL for acquiring the content of the DLNA-compliant appliance 9 on the LAN 6 obtained by the content information collection processor 302, and thereby acquires the content retained in the DLNA-compliant appliance 9. The content acquisition processor 303 additionally sends the acquired content to the content transfer processor 306 described later. Incidentally, the operation of the content acquisition processor 303 is controlled by the differential calculation processor 305 described later.

The appliance/content information management DB 304 records, in a time series, the device information of the DLNA-compliant appliance 9 on the LAN 6 collected by the appliance search processor 301 and the content information of the contents retained in the respective DLNA-compliant appliances 9 on the LAN 6 acquired by the content information collection processor 302.

The differential calculation processor 305 compares the device information of the DLNA-compliant appliance 9 on the LAN 6 obtained from the appliance search processor 301 and the previous device information of the DLNA-compliant appliance 9 on the LAN 6 recorded in the appliance/content information management DB 304, and thereby calculates whether there is any change in the configuration of the DLNA-compliant appliance 9 on the LAN 6. In addition, if there is any increase or decrease in the number of DLNA-compliant appliances 9 on the LAN 6 due to the addition or removal thereof, the differential calculation processor 305 acquires the device information of the DLNA-compliant appliance 9 that was added to or removed from the LAN 6 and the metadata of the contents retained in the DLNA-compliant appliance 9 from the appliance/content information management DB 304, and sends such device information and metadata to the virtual device creation/termination processor 308 described later.

Subsequently, the differential calculation processor 305 compares the content information retained in the respective DLNA-compliant appliances 9 on the LAN 6 obtained from the content information collection processor 302 and the previous content information of the relevant DLNA-compliant appliance 9 on the LAN 6 recorded in the appliance/content information management DB 304, and thereby calculates whether there is any change to the contents retained in that DLNA-compliant appliance 9. Moreover, if there is any change to the contents such as new contents being added, the differential calculation processor 305 sends such content information to the metadata inquiry processor 309 described later. If the differential calculation processor 305 still determines that the content is new content even after the processing of the metadata inquiry processor 309 described later is performed, it requests the content acquisition processor 303 to acquire that content.

The content transfer processor 306 assigns an identifier that is unique to the storage apparatus 5 to the content acquired by the content acquisition processor 303, and transfers such content to the storage apparatus 5. The content transfer processor 306 additionally records the unique identifier for acquiring the content recorded in the storage apparatus 5 as one information item of that content of the appliance/content information management DB 304.

The search request processor 307 receives, from the DLNA-compliant appliance 9 on the LAN 6, an independent request message with the date and time or the device name contained in the device information as the arguments, and a request message for ending the request. The search request processor 307 searches the appliance/content information management DB 304 with the date and time and device name contained in the request message as the query, acquires the appliance/content information of the corresponding DLNA-compliant appliance 9, and sends the acquired information to the virtual device creation/termination processor 308.

If a DLNA-compliant appliance 9 is removed from the LAN 6, the virtual device creation/termination processor 308 uses the device information of the DLNA-compliant appliance 9 and the content information of that DLNA-compliant appliance 9 sent from the differential calculation processor 305 to create a virtual device 310 described later. If the DLNA-compliant appliance 9 is reconnected to the LAN 6, the virtual device creation/termination processor 308 receives the device information of that DLNA-compliant appliance 9 from the differential calculation processor 305, and terminates the virtual device 310 corresponding to the DLNA-compliant appliance 9.

In addition, the virtual device creation/termination processor 308 uses the device information of the DLNA-compliant appliance 9 and the content information of that DLNA-compliant appliance 9 delivered from the search request processor 307 to create or terminate the virtual device 310 described later. Upon creating the virtual device 310 described later, if the device information or the content information contains a location identifier that becomes invalidated as a result of the DLNA-compliant appliance 9 being disconnected from the LAN 6, that location identifier is converted into a location identifier (IP address and port) of the network apparatus 8 that is not redundant for each DLNA-compliant appliance 9, and such correspondence is additionally recorded as an information item of the device information or the content information of that DLNA-compliant appliance 9.

The metadata inquiry processor 309 uses the metadata and the like of the content contained in the content information sent from the differential calculation processor 305 to make an inquiry to the storage apparatus 5 on whether such content has already been backed up based on its original protocol for backing up other data. If that content has already been backed up in the storage apparatus 5, the metadata inquiry processor 309 acquires the identifier for accessing the content in the storage apparatus 5, and additionally records this as one information item of that content of the appliance/content information management DB 304. Meanwhile, if that content has not been backed up in the storage apparatus 5, the metadata inquiry processor 309 notifies the differential calculation processor 305 that such content is a new content.

The appliance information management unit 311 retains the device information of the DLNA-compliant appliance 9 sent from the virtual device creation/termination processor 308.

The content information management unit 312 retains the content information of the DLNA-compliant appliance 9 sent from the virtual device creation/termination processor 308.

The content reception processor 313 acquires, in accordance with the content acquisition request to the content distribution processor 316 described later and from the appliance/content information management DB 304, an identifier that is unique to the storage apparatus 5 corresponding to that content sent from the virtual device creation/termination processor 308, and uses that identifier to acquire the content from the storage apparatus 5.

When the appliance search reply processor 314 receives an appliance search message from another DLNA-compliant appliance 9 on the LAN 6, it makes a reply using the device information retained in the appliance information management unit 311, and functions as an DLNA-compliant appliance 9 that has been removed from the LAN 6 (executes the same processing as a removed DLNA-compliant appliance 9).

When the content information reply processor 315 receives a content information collection request from another DLNA-compliant appliance 9 on the LAN 6, it makes a reply using the content information retained in the content information management unit 312, and functions as though it is retaining the contents retained in the DLNA-compliant appliance 9 that was removed from the LAN 6.

When the content distribution processor 316 receives a content acquisition request from another DLNA-compliant appliance 9 on the LAN 6, it requests the content reception processor 313 to acquire the corresponding content and distribute such content to the other DLNA-compliant appliance 9.

Incidentally, each of the foregoing functional units 301 to 316 is realized by a program stored in the hard disk 25 or the ROM 22 being expanded to the RAM 21 and executed by the CPU 20.

(2) System Processing

The processing to be executed by the core unit 300 and the processing to be executed by the virtual device unit 310 in the network apparatus 8 according to the present embodiment are now explained in detail. As a result of performing the foregoing processing, the network apparatus 8 backs up the data retained in the DLNA-compliant appliance 9 connected to the LAN 6 of the home network 2 to the storage apparatus 5, and releases the data backed up in the storage apparatus 5 to the DLNA-compliant appliance 9 connected to the LAN 6 of the home network 2.

(2-1) Core Processing

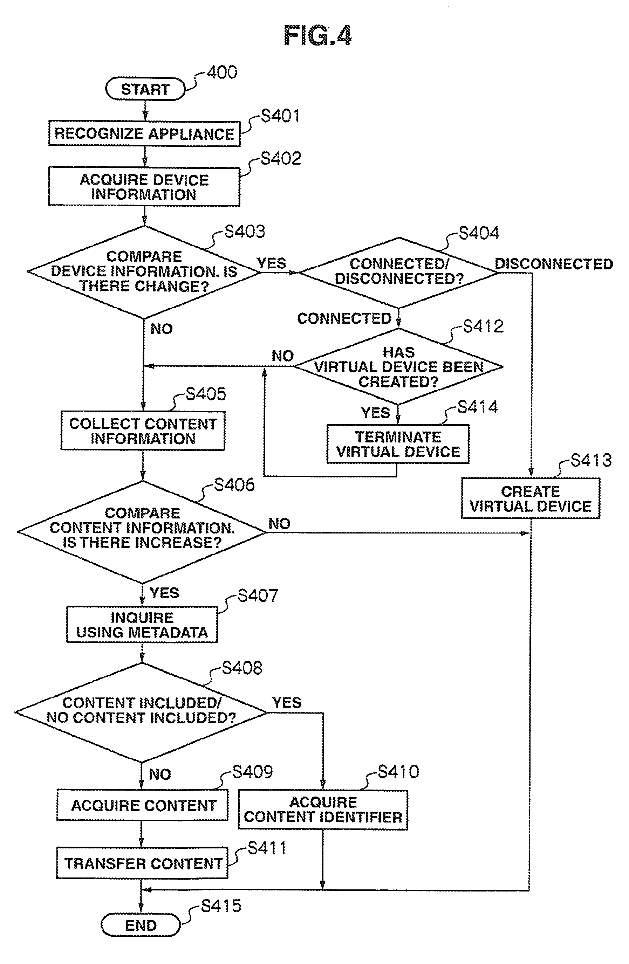

Fig. 4 is a diagram explaining the flow of the core processing (backup processing of contents in the DLNA-compliant appliance 9) 400 to be performed by the core unit 300 in the network apparatus 8. The core processing 400 is executed in predetermined time intervals such as every 10 minutes, or repeatedly executed at odd intervals.

At S401, the appliance search processor 301 of the core unit 300 of the network apparatus 8 sends an appliance search message in SSDP based on the DLNA guidelines, and acquires the location identifier (URL, etc.) showing the existence of the DLNA-compliant appliance 9 and which is the inquiry destination for acquiring the device information of such DLNA-compliant appliance 9 from the DLNA-compliant appliance 9 connected to the LAN 6 in the home network 2. If a plurality of DLNA-compliant appliances 9 are connected to the LAN 6, the appliance search processor 301 acquires a plurality or replies.

At S402, the appliances search processor 301 sends a device information acquisition request to the respective DLNA-compliant appliances 9 acquired at S401 to acquire the device information of each DLNA-compliant appliance 9, and records the acquired device information in the appliance/content information management DB 304.

At S403, the differential calculation processor 305 refers to and compares the device information of the respective DLNA-compliant appliances 9 acquired at S402 and the device information of the relevant DLNA-compliant appliance 9 recorded previously at S402. Here, the differential calculation processor 305 uses the device information to determine whether there is any change to the network configuration in the home network 2 such as if the previous device information of the DLNA-compliant appliance 9 to be compared does not exist (Changed: connection at S404 described later), or if the device information corresponding to the DLNA-compliant appliance 9 previously recorded at S402 has not been acquired this time around (Changed: disconnection at S404 described later). If the current device information and the previous device information of the respective DLNA-compliant appliances 9 coincide, the differential calculation processor 305 determines this to be "Unchanged." In the core processing 400, the routine proceeds to S404 if it is determined to be "Changed," and the routine proceeds to S405 if it is determined to be "Unchanged."

At S404, the differential calculation processor 305 determines the connection or disconnection of the DLNA-compliant appliance 9 to or from the LAN 6 derived at S403. In the core processing 400, the routine proceeds to S412 if it is determined to be "Connected" and the routine proceeds to S413 if it is determined to be "Disconnected."

At S405, the content information collection processor 302 makes an inquiry to the location identifier (URL) for making inquiries concerning the content information contained in the device information obtained at S402, and acquires content information as metadata of contents including the content name, location identifier for acquiring the content, and so on. The content information collection processor 302 records the acquired content information in the appliance/content information management DB 304.

At S406, the differential calculation processor 305 refers to and compares the content information of the respective DLNA-compliant appliances 9 recorded at S405 and the content information of the relevant DLNA-compliant appliance 9 previously recorded at S405. Here, if there is no content information acquired previously at S405 to be compared with the content information acquired currently at S405 as a result of the comparison, the content information collection processor 302 determines that the contents retained in the DLNA-compliant appliance 9 have increased (Increased). In the core processing 400, the routine proceeds to S407 if the contents determined to have increased (increased), and the routine proceeds to S415 in all other cases.

At S407, the metadata inquiry processor 309 accesses the storage apparatus 5, uses the content information of the content that was determined to have increased at S406 to send a request for confirming whether that content has already been recorded in the storage apparatus 5, and then obtains the result.

At S408, the metadata inquiry processor 309 refers to the result obtained at S407, and determines whether that content has already been recorded in the storage apparatus 5. In the core processing 400, the routine proceeds to S409 if it is determined that the relevant content has not been recorded in the storage apparatus 5, and the routine proceeds to S410 if it is determined that the relevant content has already been recorded in the storage apparatus 5.

At S409, the content acquisition processor 303 sends a content acquisition request to the location identifier for acquiring the content obtained at S405, acquires that content from the DLNA-compliant appliance 9 on the LAN 6 in the home network 2, and sends the acquired data to the content transfer processor 306.

At S410, the metadata inquiry processor 309 acquires the identifier (URL, etc.) for accessing the content which as already been recorded in the storage apparatus 5, and additionally records the acquired identifier in the appliance/content information management DB 304 as one type of content information of that content separate from the content information compliant with the DLNA guidelines.

At S417. the content transfer processor 306 assigns an identifier, which will be unique to the storage apparatus 5, to the content obtained at S409 and records this in the storage apparatus 5. Moreover, the content transfer processor 306 additionally records the identifier (URL, etc.) for accessing the content in the storage apparatus 5 in the appliance/content information management DB 304 as one type of content information of that content separate from the content information that is compliant with the DLNA guidelines.

At S412, the virtual device creation/termination processor 308 confirms whether a virtual device 310 corresponding to the DLNA-compliant appliance 9 determined at S404 to be connected to the LAN 6 of the home network 2 has already been created. In the core processing 400, the routine proceeds to S414 if it is determined that the virtual device 310 has already been created, and the routine proceeds to S405 if it is determined that the virtual device 310 has not been created.

At S413, the virtual device creation/termination processor 308 creates a virtual device 310 corresponding to the DLNA-compliant appliance 9 determined at S404 to have been disconnected from the LAN 6 of the home network 2 using the device information and the content information of the DLNA-compliant appliance 9 previously referred to at S403.

At S414, the virtual device creation/termination processor 308 terminates the created virtual device 310 corresponding to the DLNA-compliant appliance 9 determined at S404 to be connected to the LAN 6 of the home network 2.

At S415, the core processing 400 is ended.

Based on the processing of S401 to S415 described above, the network apparatus 8 of the present invention backs up the data retained in the DLNA-compliant appliance 9 connected to the LAN 6 of the home network 2 to the storage apparatus 5, and creates/terminates the virtual device 310 according to the addition or removal of the DLNA-compliant appliance 9 to or from the LAN 6 of the home network 2.

(2-2) Search Request Processing

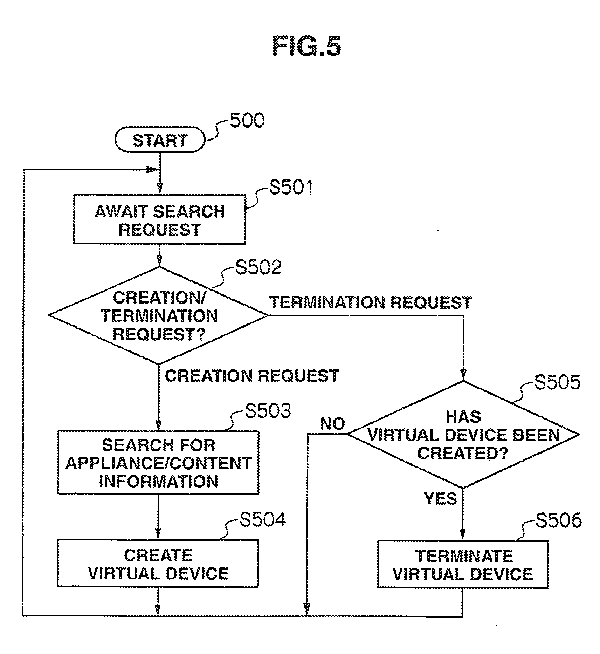

Fig. 5 is a diagram explaining the flow of the search request processing 500 to be performed by the core unit 300 in the network apparatus 8.

At S501, the search request processor 307 of the core unit 300 of the network apparatus 8 awaits a search request from the DLNA-compliant appliance 9 connected to the LAN 6 of the home network 2.

A search request can be classified into a request for creating the virtual device 310 and a request for terminating the virtual device 310. The search request for creating the virtual device 310 includes information such as the device name and designated date and time based on the device information, and it is possible to designate an arbitrary DLNA-compliant appliance 9, and such DLNA-compliant appliance 9 at a certain point in time.

Here, if the search request for creating the virtual device 310 does not designate the device name of the DLNA-compliant appliance 9 and only designates the date and time, the search request processor 307 interprets this to mean all DLNA-compliant appliances 9 in the home network 2 corresponding to that date and time.

Further, if the search request for creating the virtual device 310 does not designate the date and time and only designates the device name of the arbitrary DLNA-compliant appliance 9, the search request processor 307 interprets this to mean the DLNA-compliant appliance 9 throughout the entire time accounted for by the network apparatus 8. Here, the search request processor 307 interprets that the DLNA-compliant appliance 9 includes all contents that have been previously retained in the DLNA-compliant appliance 9 and backed up to the storage apparatus 5, including the contents that have already been deleted.

In addition, if the search request for creating the virtual device 310 does not designate the date and time or the device name, the search request processor 307 interprets this to mean all DLNA-compliant appliances 9 that have been previously connected to the LAN 6 of the home network 2 throughout the entire time based on information accumulated in the appliance/content information management DB 304 of the network apparatus 8.

At S502, the search request processor 307 determines whether the received request is a request for creating the virtual device 310 or a request for terminating the virtual device 310. In the search request processing 500, the routine proceeds to S503 if it is determined to be a request for creating the virtual device 310, and the routine proceeds to S505 if it is determined to a request for terminating the virtual device 310.

At S503, the search request processor 307 makes an inquiry to the appliance/content information management DB 304 with the device name and the date and time contained in the received request for creating the virtual device 310 as the query. The search request processor 307 thereafter sends the device information and the content information of the corresponding DLNA-compliant appliance 9 to the virtual device creation/termination processor 308.

At S504, the virtual device creation/termination unit 308 uses the device information and the content information acquired at S503 to create the virtual device 310 that functions entirely the same as the DLNA-compliant appliance 9 on the LAN 6 of the home network 2.

At S505, the virtual device creation/termination processor 308 uses the device information contained in the termination request to determine whether the corresponding virtual device 310 has already been created. In the search request processing 500, the routine proceeds to S506 if it is determined that the corresponding virtual device 310 has already been created.

At S506, the virtual device creation/termination processor 308 terminates the virtual device 310 confirmed at S505.

The network apparatus 8 repeats the processing from S501 to S506. Like this, with the network apparatus 8, by sending a search request designating the device retaining the intended data and its date and time from the DLNA-compliant appliance 9 connected to the LAN 6 of the home network 2 as required, a virtual device 310 of a certain point in the past of the designated DLNA-compliant appliance 9 is created in the network apparatus 8. Thereby, the network apparatus 8 is able to access the virtual device 310, which is like a snapshot of the DLNA-compliant appliance 9 in the past, in device units of DLNA-compliant appliances 9, and access the intended content.

In addition, with the network apparatus 8, if the device name of the DLNA-compliant appliance 9 is not designated and only the date and time is designated, the virtual device 310 of all DLNA-compliant appliances 9 in the home network 2 corresponding to that date and time is created. Thereby, the network apparatus 8 is able to access the virtual device 310, which is like a snapshot of the home network 2, and access the intended content.

Moreover, with the network apparatus 8, if the date and time is not designated and only the device name of the DLNA-compliant appliance 9 is designated, a virtual device 310 that functions so as to retain the contents backed up by the DLNA-compliant appliance 9 corresponding to that device name throughout the entire period. Thereby, the network apparatus 8 is able to access the virtual device 310 and access the intended content.

(2-3) Virtual Device Processing

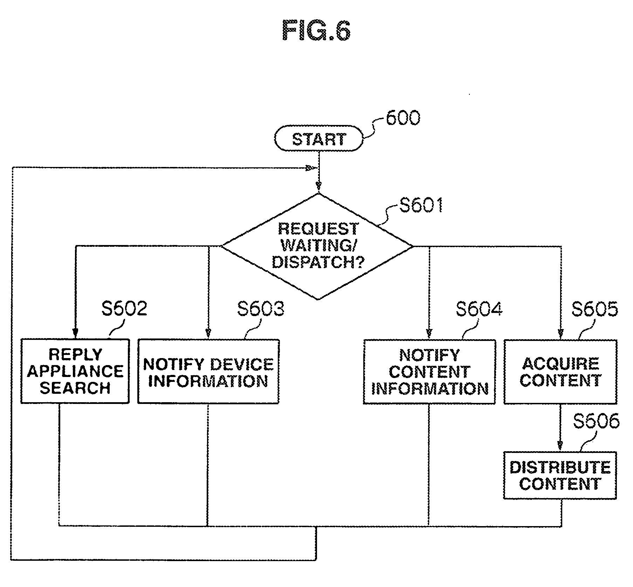

Fig. 6 is a diagram explaining the flow of the virtual device processing 600 to be performed by the virtual device unit 30 in the network apparatus 8.

At S601, the virtual device unit 310 of the network apparatus 8 receives a request message from the DLNA-compliant appliance 9 connected to the LAN 6 of the home network 2, and dispatches (allocates) processing according to the request message. In the virtual device processing 600, the routine proceeds to S602 if the request message is an appliance search message in SSDP set forth in the DLNA guidelines, the routine proceeds to S603 if the request message is a device information acquisition request, the routine proceeds to S604 if the request message is a content information acquisition request, and the routine proceeds to S605 if the request message is a content acquisition request.

At S602, the appliance search reply processor 314 sends an appliance search reply message in SSDP including the location identifier (URL, etc.) for acquiring the device information retained in the appliance information management unit 311 to the DLNA-compliant appliance 9 as the sending source of the request message (appliance search message).

At S603, the appliance search reply processor 314 sends a reply message including the device information such as the location identifier (URL, etc.) for acquiring the content information retained in the appliance information management unit 311 to the DLNA-compliant appliance 9 as the sending source of the request message (device information acquisition request).

At S604, the content information reply processor 315 sends a reply message containing the content information as metadata of contents such as the location identifier (URL, etc.) for acquiring the content retained in the content information management unit 312 to the DLNA-compliant appliance 9 as the sending source of the request message (content information acquisition request).

At S605, the content distribution processor 316 requests the content reception processor 313 to acquire the content recorded in the storage apparatus 5 corresponding to the content acquisition request, and the content reception processor 313 uses a unique identifier (URL, etc.) for acquiring the content recorded in the storage apparatus 5 to acquire such content from the storage apparatus 5, and then delivers that content to the content distribution processor 316.

At S606, the content distribution processor 316 sends the content delivered at S605 to the DLNA-compliant appliance 9 as the sending source of the request message (content acquisition request).

In the network apparatus 8, the processing from S600 to S606 is repeatedly performed. Thereby, the virtual device unit 310 is recognized by the DLNA-compliant appliance 9 connected to the LAN 6 of the home network 2 as DMS set forth according to the DLNA guidelines. In addition, a plurality of virtual devices 310 will be created by the virtual device creation/termination processor 308 according to the connection status of a plurality of DLNA-compliant appliances 9 that are added to or removed from the LAN 6 of the home network 2.

(4) Various Types of Information

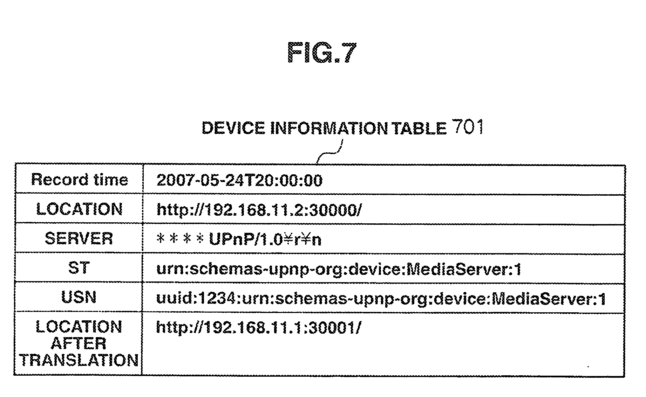

Fig. 7 shows an example of the device information table 701 of the DLNA-compatible appliance 9 connected to the LAN 6 that is recorded in the appliance/content information management DB 304 and acquired by the appliance search processor 301. The device information table 701 stores, for each DLNA-compatible appliance 9, the time (Record Time) that the information was recorded, the location identifier (LOCATION) for acquiring the device information of the appliance, the service type (ST) simply showing the type of appliance and the unique service name (USN) for each appliance. If a virtual device unit 310 corresponding to that appliance is created by the virtual device creation/termination processor 308, the device information table 701 will also store the location after translation (LOCATION) showing the vocation identifier of the appliance search reply processor 314 and the content information reply processor 315 of the virtual device unit 310.

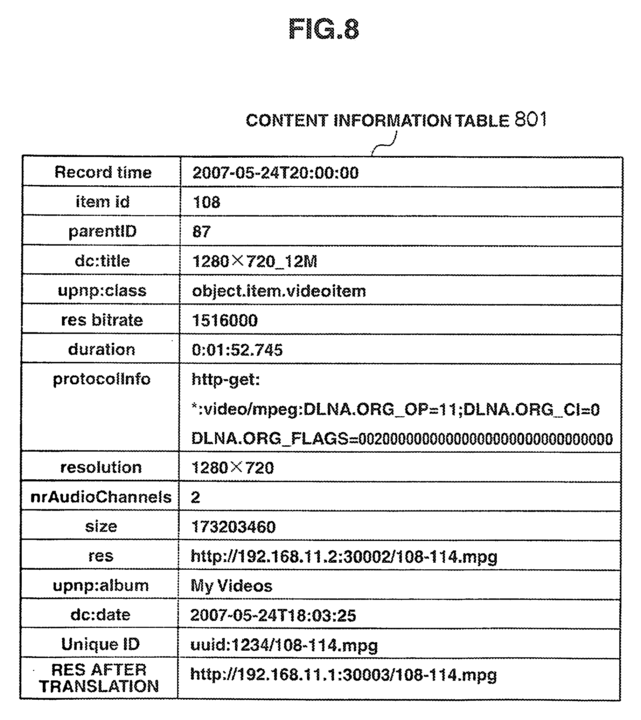

Fig. 8 shows an example of the content information table 801 retained in the DLNA-compatible appliance 9 connected to the LAN 6 that is recorded in the appliance/content information management DB 304 and acquired by the content information collection processor 302. The content information table 801 stores, for each content retained by the respective DLNA-compatible appliances 9, the time (Record Time) that the information was recorded, the identifier (item id) of the content, the identifier (parent ID) of the stored folder, the time name (dc:title), the class (upnp:class), the bit rate (res bit rate) of the content, the length (duration) of the content, the resolution (resolution), the size (size), the location identifier (res) for acquiring the content, and the time (dc:date) that the content was recorded. In addition, if a virtual device unit 310 corresponding to the DLNA-compliant appliance 9 retaining the content is created by the virtual device creation/termination processor 308, the content information table 801 will additionally store the location identifier (res after translation) of the content distribution processor 316 of the virtual device unit 310 and the unique identifier (Unique ID) for accessing the content in the storage apparatus.

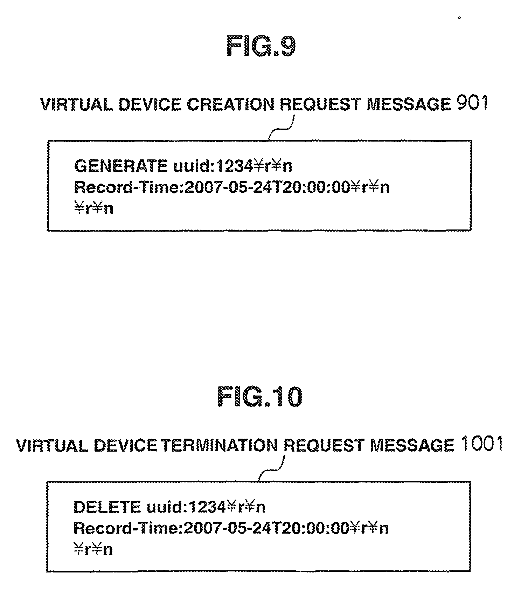

Fig. 9 shows an example of the virtual device creation request message 901 as a request message for creating the virtual device 310 that includes an identifier (part of USN) for uniquely identifying the device and/or the time (Record Time) designating a certain point in the past of the device sent from the DLNA-compliant appliance 9 on the LAN 6, and which is awaited by the search request processor 307 at S501. The virtual device creation/termination processing unit 308 searches the appliance/content information management DB 304 at S503 based on the information contained in the virtual device creation request message 901, and uses the information of the corresponding DLNA-compliant appliance 9 to create a virtual device 310 at S504.

Fig. 10 shows an example of the virtual device termination request message 1001 as a request message for terminating the virtual device 310 created based on the request message of Fig. 9. The virtual device termination request message 1001 includes an identifier (part of USN) for uniquely identifying the device and the time designating a certain point in the past of the device sent from the DLNA-compliant appliance 9 on the LAN 6. The search request processor 307 awaits the virtual device termination request message 1001 at S501, and the virtual device creation/termination processor 308 confirms whether the corresponding virtual device 310 has already been created at S505 based on the information contained in the virtual device termination request message 1001, and then terminates the virtual device 310 at S506.

(5) Specific Examples of System Processing

(5-1) Preconditions

A specific example of the processing performed with the network apparatus 8 connected to the LAN 6 of the home network 2 of backing up the content of the DLNA-compliant appliance 9 in the home network 2 to the storage apparatus 5, and then enabling another DLNA-compliant appliance 9 to efficiently refer to and acquire such content backed up to the storage apparatus 5 according to the addition or removal of the DLNA-compliant appliances 9 to or from the LAN 6 is now explained with reference to Fig. 1

In the specific example explained below, the mobile phone 10 and the DLNA-compliant appliance 9a are the same appliance, and this appliance will be referred to as the DLNA-compliant appliance 9a when it is connected to the LAN 6 of the home network 2, and be connected to the mobile phone network 4 and function as a mobile phone 10 when it is not connected to the LAN 6 of the home network 2.

The network system 1 is configured as follows. Foremost, the mobile phone 10 is connected to the mobile phone network 4, and a DLNA-compliant appliance 9b as a stand-alone appliance such as a TV and which only possesses the function as a DMP, a network apparatus 8 and a home router 7 are connected to the LAN 6, thereby configuring a home network 2.

Let it be assumed that the mobile phone 10 newly created a content A and a content B upon connection to the mobile phone network 4. The mobile phone 10 is loaded with a backup function based on an independent protocol, and designated contents can be recorded in the storage apparatus 5 upon connection to the mobile phone network 4. Let it be assumed that the mobile phone 10 designates the content A for backup to the storage apparatus 5.

(5-2) New Addition to Home Network 2

The mobile phone 10 is disconnected from the mobile phone network 4 as a result of being connected to the LAN 6 of the home network 2, and thereby becomes a DLNA-compliant appliance 9a. Connected to the LAN 6 of the home network 2 are a home router 7, the network apparatus 8 of the present invention, a DLNA-compliant appliance 9a, and a DLNA-compliant appliance 9b.

The core unit 300 of the network apparatus 8 executes the core processing 400. The core unit 300 of the network apparatus 8 becomes aware of the existence of the DLNA-compliant appliance 9a and the DLNA-compliant appliance 9b on the LAN 6 based on the processing from S401 to S402, and acquires the device information of the DLNA-compliant appliance 9a as the DMS retaining the content. Subsequently, the core unit 300 of the network apparatus 8 becomes aware that the DLNA-compliant appliance 9a has been newly connected to the LAN 6 of the home network 2 based on the processing from S403 to S404.

Subsequently, the core unit 300 of the network apparatus 8 confirms at S412 that the virtual device 310 corresponding to the DLNA-compliant appliance 9a has not been created. The core unit 300 of the network apparatus 8 there after acquires at S405 the content information of the DLNA-compliant appliance 9a, and becomes aware that the content A and the content B are retained. Subsequently, the core unit 300 of the network apparatus 8 at S406 becomes aware that the content A and the content B have been newly created, and at S407 makes an inquiry using the metadata and the like of the respective contents acquired at S405 regarding whether the content A and the content B have already been recorded in the storage apparatus 5.

Subsequently, the core unit 300 of the network apparatus 8 at S408 becomes aware that the content already exists in the storage apparatus 5, and at S410 obtains the identifier (URL, etc.) for acquiring the content A in the storage apparatus 5. Moreover, the core unit 300 of the network apparatus 8 becomes aware at S408 that the content B has not been recorded in the storage apparatus 5, and at S409 acquires the content B from the DLNA-compliant appliance 9a.

Subsequently, the core unit 300 of the network apparatus 8 at S411 assigns an identifier that is unique to the storage apparatus 5 for accessing the content B acquired at S409, and records this in the storage apparatus 5.

Based on the above, with the network apparatus 8, the content A and the content B are recorded in the storage apparatus 5, and information such as the identifier for acquiring the content A and the content B from the storage apparatus 5 and the metadata thereof are recorded in the appliance/content information management DB 304.

Here, the DLNA-compliant appliance 9b as the DMP connected to the LAN 6 in the home network 2 becomes aware of the existence of the DLNA-compliant appliance 9a as the DMS and, by sending various request messages to the DLNA-compliant appliance 9a, is able to refer to and acquire the content A and the content B retained in the DLNA-compliant appliance 9a.

(5-3) Removal From Home Network 2

Subsequently, the DLNA-compliant appliance 9a is disconnected from the LAN 6 of the home network 2 and removed from the home network 2. The removed DLNA-compliant appliance 9a is connected to the mobile phone network 4 and becomes the mobile phone 10. Connected to the LAN 6 of the home network 2 are the home router 7, the network apparatus 8 of the present invention, and the DLNA-compliant appliance 9b.

The core unit 300 of the network apparatus 8 connected to the LAN 6 of the home network 2 once again executes the core processing S400 after a given period of time. The core unit 300 of the network apparatus 8 becomes aware of the existence of the DLNA-compliant appliance 9b on the LAN 6 based on the processing from S401 to S402. Subsequently, the core unit 300 of the network apparatus 8 becomes aware that the DLNA-compliant appliance 9a has been disconnected from the LAN 6 of the home network 2 and removed from the home network 2 based on the processing from S403 to S404. The core unit 300 of the network apparatus 8 thereafter accesses the appliance/content information management DB 304 at S413, acquires the device information and the content information of the DLNA-compliant appliance 9a at the time the previous core processing 400 was executed, and uses that information to create a virtual device 310 of the DLNA-compliant appliance 9a that operates as a DMS set forth in the DLNA guidelines.

Here, the DLNA-compliant appliance 9b connected to the LAN 6 of the home network 2 is able to refer to and acquire, based on the virtual device 310, the content data retained in the DLNA-compliant appliance 9a as though the DLNA-compliant appliance 9a is still connected to the LAN 6 of the home network 2.

Based on the above, with the network apparatus 8, the DLNA-compliant appliance 9b in the home network 2 is able to seamlessly access the contents retained in the DLNA-compliant appliance 9a that has been removed from the home network, and the referable contents will only be the contents retained in the DLNA-compliant appliance 9a. Thus, this is efficient in cases where a plurality of DLNA-compliant appliances 9 are added to or removed from the home network 2. Although this embodiment explains a case where the DLNA-compliant appliance 9a is a mobile appliance that is frequency added to or removed from the LAN 6, contents retained in the DLNA-compliant appliance can also be seamlessly accessed when the power is turned off or when the appliance malfunctions or is discarded.

Let it be assumed that the mobile phone 10 connected to the mobile phone network 4 was thereafter removed from the home network 2 and created a new content C.

(5-4) Reconnection to Home Network 2

When the mobile phone 10 is reconnected to the LAN 6 of the home network 2, it is disconnected from the mobile phone network 4 and becomes a DLNA-compliant appliance 9a. Connected to the LAN 6 of the home network 2 are the home router 7, the network apparatus 8 of the present invention, the DLNA-compliant appliance 9a and the DLNA-compliant appliance 9b.

The core unit 300 of the network apparatus 8 executes the core processing S400. The core unit 300 of the network apparatus 8 becomes aware of the existence of the DLNA-compliant appliance 9a and the DLNA-compliant appliance 9b on the LAN 6 based on the processing from S401 to S402, and acquires the device information of the DLNA-compliant appliance 9a as the DMS retaining the content. Subsequently, the core unit 300 of the network apparatus 8 becomes aware that the DLNA-compliant appliance 9a has been newly connected to the LAN 6 of the home network 2 based on the processing from S403 to S404.

Subsequently, the core unit 300 of the network apparatus 8 at S412 becomes aware that a virtual device 310 corresponding to the DLNA-compliant appliance 9a has already been created. The core unit 300 of the network apparatus 8 thereafter terminates the virtual device 310 at S414. Subsequently, the core unit 300 of the network apparatus 8 compares the content information and becomes aware that the content C has been newly added based on the processing from S405 to S406, and at S407 confirms whether the content C has already been recorded in the storage apparatus 5 by making an inquiry using the metadata and the like of the content C acquired at S405.

Subsequently, the core unit 300 of the network apparatus 8 at S408 becomes aware that the content C has not been recorded in the storage apparatus 5, and at S409 acquires the content C from the DLNA-compliant appliance 9a. The core unit 300 of the network apparatus 8 thereafter at S411 assigns an identifier that is unique to the storage apparatus 5 for accessing the content C acquired at S409, and records this in the storage apparatus 5.

Based on the above, with the network apparatus 8, the content A, the content B and the content C are recorded in the storage apparatus 5, and information such as the identifier for acquiring the content A, the content B and the content C from the storage apparatus 5 and the metadata thereof as the content information is recorded in the appliance/content information management DB 304 of the network apparatus 8.

Here, the DLNA-compliant appliance 9b as the DMP connected to the LAN 6 in the home network becomes aware of the existence of the DLNA-compliant appliance 9a as the DMS and, by sending various request messages to the DLNA-complant appliance 9a, is able to refer to and acquire the content A, the content B and the content C retained in the DLNA-compliant appliance 9a.

(6) Modified Example

With the network apparatus 8 of the present embodiment, the device information and the content information of the respective DLNA-compliant appliances 9 are recorded in the appliance/content information management DB 304 of the network apparatus 8. Nevertheless, the appliance/content information management DB 304 may also be provided in the storage apparatus 5. Consequently, the network apparatus 8 will be able to reduce the used storage capacity, and, even in cases where various types of information cannot be acquired from the appliance/content information management DB 304 of the network apparatus 8 due to some reason or other, the object of the present invention can be continued by replacing it with another network apparatus 8.

In addition, with the network system 1 of this embodiment, although the storage apparatus 5 exists on the Internet 3, the network apparatus 8 may also possess the function of the storage apparatus 5. Consequently, with the network system 1, all contents can be backed up with the network apparatus 8 in the home network.

Moreover, although the storage apparatus 5 of this embodiment is represented as a single apparatus, it may be physically distributed into a plurality of apparatuses.

The foregoing embodiments were explained to facilitate the understanding of the present invention and are not intended to limit the interpretation of this invention in any way.

The present invention can be broadly applied to network apparatuses that back up data retained in the respective appliances on a home network to a storage apparatus on the network.

## Claims

1. A network apparatus, comprising:
a confirmation unit (301) for confirming device information of an appliance (9) connected to a network (6) in a certain area at predetermined time intervals;
a collecting unit (302) for collecting content information retained in the appliance (9) based on the confirmed device information;
a transfer unit (306) for transferring the collected content information to a storage apparatus (5) outside of the area; **characterized in that** the network apparatus is further comprising:
a setting unit (308) for, when the confirmation unit detects that the appliance (9) has been disconnected from the network (6) and a request for the content retained in the appliance (9) is issued to the appliance (9), setting, on a memory in the network apparatus (8), a virtual device (310) that transfers the content stored in the storage apparatus (5) to a transmission source of the request for the content so that it appears as if the appliance (9) having been disconnected from the network (6) is connected to the network (6) ;
and
a distribution unit (316) for distributing, when an acquisition request of the content is issued to the appliance disconnected from the network (6), the content read from the storage (5) to a sending source of the acquisition request with the virtual device (310) as the transmission source of the content.

2. The network apparatus according to claim 1, further comprising:
a termination unit (308) for terminating the virtual device set by the setting unit (308) when the appliance (9) is reconnected to the network (6).

3. The network apparatus according to claim 1,
wherein the acquisition unit compares the appliance (9) and the content confirmed with the confirmation unit and the previous appliance (9) and the previous content, and acquires an unacquired content.

4. The network apparatus according to claim 1,
wherein the virtual device (310) includes:
an appliance information management unit (311) for managing information of the appliance (9);
a content information management unit (312) for managing information of the content;
a content acquisition unit (313, 316) for acquiring a desired content from the storage apparatus (5);
an appliance information reply unit (314) for replying to a request for confirming information of a self-appliance from another appliance of the network;
a content information reply unit (315) for replying to a request for confirming information of a content retained in a self-appliance from another appliance (9) of the network (6); and
a distribution unit (316) for distributing the content to another appliance (9) in reply to a request for acquiring a content retained in a self-appliance from the other appliance of the network (6).

5. The network apparatus according to claim 1,
wherein the setting unit (308) sets a virtual device (310) simulating an appliance (9) at a corresponding point in time based on a designation of a name or date and time of the appliance (9).

6. The network apparatus according to claim 5,
wherein the setting unit (308) sets a virtual device (310) as though it is retaining all contents previously retained by the corresponding appliance based on the designation of the name of the appliance.

7. The network apparatus according to claim 5,
wherein the setting unit (308) sets a virtual device (310) simulating all of the appliances existing on the network at a corresponding point in time based on the designation of the date and time.

## Patentansprüche

1. Netzwerkvorrichtung mit:
einer Bestätigungseinheit (301) zum Bestätigen von Vorrichtungsinformationen eines Geräts (9), das mit einem Netzwerk (6) verbunden ist, in einem bestimmten Bereich zu vorgegebenen Zeitintervallen;
einer Sammeleinheit (302) zum Sammeln von Inhaltsinformationen, die in dem Gerät (9) festgehalten werden, auf der Grundlage der bestätigen Vorrichtungsinformationen;
einer Übertragungseinheit (306) zum Übertragen der gesammelten Inhaltsinformationen an eine Speichervorrichtung (5) außerhalb des Bereichs;
**dadurch gekennzeichnet, dass** die Netzwerkvorrichtung weiterhin umfasst:
eine Einstelleinheit (308) zum Einstellen, wenn die Bestätigungseinheit erfasst, dass das Gerät (9) vom Netzwerk (6) getrennt worden ist, und eine Anfrage nach dem in dem Gerät (9) festgehaltenen Inhalt an das Gerät (9) ausgegeben wird, einer virtuellen Vorrichtung (310) auf einem Speicher in der Netzwerkvorrichtung (8), welche den in der Speichervorrichtung (5) gespeicherten Inhalt an eine Übertragungsquelle der Anfrage nach dem Inhalt überträgt, so dass es scheint, als ob das Gerät (9), das vom Netzwerk (6) getrennt worden ist, mit dem Netzwerk (6) verbunden ist;
und
eine Verteilungseinheit (316) zum Verteilen, wenn eine Beschaffungsanfrage nach dem Inhalt an das vom Netzwerk (6) getrennte Gerät ausgegeben wird, des aus dem Speicher (5) gelesenen Inhalts an eine Sendequelle der Beschaffungsanfrage mit der virtuellen Vorrichtung (310) als der Übertragungsquelle des Inhalts.

2. Netzwerkvorrichtung nach Anspruch 1, weiterhin mit:
einer Beendigungseinheit (308) zum Beenden der von der Einstelleinheit (308) eingestellten virtuellen Vorrichtung, wenn das Gerät (9) wieder mit dem Netzwerk (6) verbunden ist.

3. Netzwerkvorrichtung nach Anspruch 1,
wobei die Beschaffungseinheit das Gerät (9) und den mit der Bestätigungseinheit bestätigten Inhalt mit dem vorherigen Gerät (9) und dem vorherigen Inhalt vergleicht und einen nicht beschafften Inhalt beschafft.

4. Netzwerkvorrichtung nach Anspruch 1,
wobei die virtuelle Vorrichtung (310) beinhaltet:
eine Gerätinformations-Verwaltungseinheit (311) zum Verwalten von Informationen des Geräts (9);
eine Inhaltsinformations-Verwaltungseinheit (312) zum Verwalten von Informationen des Inhalts;
eine Inhaltsbeschaffungseinheit (313, 316) zum Beschaffen eines gewünschten Inhalts aus der Speichervorrichtung (5);
eine Gerätinformations-Antworteinheit (314) zum Antworten auf eine Anfrage zum Bestätigen von Informationen eines Eigen-Geräts von einem anderen Gerät des Netzwerks;
eine Inhaltsinformations-Antworteinheit (315) zum Antworten auf eine Anfrage zum Bestätigen von Informationen eines in einem Eigen-Gerät festgehaltenen Inhalts von einem anderen Gerät (9) des Netzwerks (6); und
eine Verteilungseinheit (316) zum Verteilen des Inhalts an ein anderes Gerät (9) als Antwort auf eine Anfrage zum Beschaffen eines in einem Eigen-Gerät festgehaltenen Inhalts von dem anderen Gerät des Netzwerks (6).

5. Netzwerkvorrichtung nach Anspruch 1,
wobei die Einstelleinheit (308) eine virtuelle Vorrichtung (310) einstellt, die ein Gerät (9) zu einem entsprechenden Zeitpunkt auf der Grundlage einer Bezeichnung eines Namens oder Datums und einer Uhrzeit des Geräts (9) simuliert.

6. Netzwerkvorrichtung nach Anspruch 5,
wobei die Einstelleinheit (308) eine virtuelle Vorrichtung (310) so, als ob sie alle Inhalte zurückhält, die zuvor von dem entsprechenden Gerät festgehalten wurden, auf der Grundlage der Bezeichnung des Namens des Geräts einstellt.

7. Netzwerkvorrichtung nach Anspruch 5,
wobei die Einstelleinheit (308) eine virtuelle Vorrichtung (310), die alle Geräte simuliert, die im Netzwerk vorhanden sind, zu einem entsprechenden Zeitpunkt auf der Grundlage der Bezeichnung von Datum und Uhrzeit einstellt.

## Revendications

1. Dispositif de réseau, comportant :
une unité de confirmation (301) pour confirmer des informations de dispositif d'un serveur monofonctionnel (9) connecté à un réseau (6) dans une zone particulière selon des intervalles de temps prédéterminés,
une unité de collecte (302) pour collecter des informations de contenu conservées dans le serveur monofonctionnel (9) sur la base des informations de dispositif confirmées,
une unité de transfert (306) pour transférer les informations de contenu collectées vers un dispositif de mémorisation (5) à l'extérieur de la zone, **caractérisé en ce que** le dispositif de réseau comporte en outre :
une unité de paramétrage (308) pour, lorsque l'unité de confirmation détecte que le serveur monofonctionnel (9) a été déconnecté du réseau (6) et qu'une demande concernant le contenu conservé dans le serveur monofonctionnel (9) est envoyée au serveur monofonctionnel (9), paramétrer, sur une mémoire dans le dispositif de réseau (8), un dispositif virtuel (310) qui transfert le contenu mémorisé dans le dispositif de mémorisation (5) vers une source de transmission de la demande pour le contenu de sorte que le serveur monofonctionnel (9) ayant été déconnecté du réseau (6) apparaît comme si il était connecté au réseau (6), et
une unité de distribution (316) pour distribuer, lorsqu'une demande d'acquisition du contenu est envoyée au serveur monofonctionnel déconnecté du réseau (6), le contenu lu à partir de la mémoire (5) à une source d'émission de la demande d'acquisition avec le dispositif virtuel (310) en tant que source de transmission du contenu.

2. Dispositif de réseau selon la revendication 1, comportant en outre :
une unité d'arrêt (308) pour arrêter le dispositif virtuel paramétré par l'unité de paramétrage (308) lorsque le serveur monofonctionnel (9) est reconnecté au réseau (6).

3. Dispositif de réseau selon la revendication 1, dans lequel l'unité d'acquisition compare le serveur monofonctionnel (9) et le contenu confirmé à l'aide de l'unité de confirmation et le serveur monofonctionnel précédent (9) et le contenu précédent, et acquiert un contenu non acquis.

4. Dispositif de réseau selon la revendication 1, dans lequel le dispositif virtuel (310) inclut :
une unité de gestion d'informations de serveur monofonctionnel (311) pour gérer des informations du serveur monofonctionnel (9),
une unité de gestion d'informations de contenu (312) pour gérer des informations du contenu,
une unité d'acquisition de contenu (313, 316) pour acquérir un contenu voulu à partir du dispositif de mémorisation (5),
une unité de réponse à des informations de serveur monofonctionnel (314) pour répondre à une demande de confirmation d'informations d'un serveur monofonctionnel autonome en provenance d'un autre serveur monofonctionnel du réseau,
une unité de réponse à des informations de contenu (315) pour répondre à une demande de confirmation d'informations d'un contenu conservé dans un serveur monofonctionnel autonome en provenance d'un autre serveur monofonctionnel (9) du réseau (6), et
une unité de distribution (316) pour distribuer le contenu à un autre serveur monofonctionnel (9) en réponse à une demande pour acquérir un contenu conservé dans un serveur monofonctionnel autonome en provenance de l'autre serveur monofonctionnel du réseau (6).

5. Dispositif de réseau selon la revendication 1,
dans lequel l'unité de paramétrage (308) paramètre un positif virtuel (310) simulant un serveur monofonctionnel (9) à un instant correspondant sur la base d'une désignation d'un nom ou d'une date et d'une heure du serveur monofonctionnel (9).

6. Dispositif de réseau selon la revendication 5,
dans lequel l'unité de paramétrage (308) paramètre un dispositif virtuel (310) comme si il contenait tous les contenus précédemment conservés par le serveur monofonctionnel correspondant sur la base de la désignation du nom du serveur monofonctionnel.

7. Dispositif de réseau selon la revendication 5,
dans lequel l'unité de paramétrage (308) paramètre un dispositif virtuel (310) simulant tous les serveurs monofonctionnels existants sur le réseau à un instant correspondant sur la base de la désignation de la date et de l'heure.
